(19) Europäisches Patentamt
European Patent Office
Office européen des brevets

(11) **EP 3 242 417 B1**

(12) **FASCICULE DE BREVET EUROPEEN**

(45) Date de publication et mention
de la délivrance du brevet:
**06.03.2019 Bulletin 2019/10**

(51) Int Cl.:
**H04B 10/118** *(2013.01)*     **H04B 7/185** *(2006.01)*

(21) Numéro de dépôt: **17169499.5**

(22) Date de dépôt: **04.05.2017**

(54) **DISPOSITIF DE COMMUNICATION INTER-SATELLITES, SATELLITE ET CONSTELLATION DE SATELLITES ASSOCIÉS**

INTERSATELLITÄRE KOMMUNIKATIONSVORRICHTUNG, ENTSPRECHENDER SATELLIT UND ENTSPRECHENDE SATELLITENKONSTELLATION

INTER-SATELLITE COMMUNICATION DEVICE, ASSOCIATED SATELLITE AND SATELLITE CONSTELLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.05.2016 FR 1600741**

(43) Date de publication de la demande:
**08.11.2017 Bulletin 2017/45**

(73) Titulaire: **THALES**
**92400 Courbevoie (FR)**

(72) Inventeurs:
• **SOTOM, Michel**
 **31100 Toulouse (FR)**
• **LE KERNEC, Arnaud**
 **31100 Toulouse (FR)**

• **FRANCASTEL, Agnès**
 **31100 Toulouse (FR)**
• **POTUAUD, Dominique**
 **31100 Toulouse (FR)**
• **FERNANDEZ, Gilles**
 **31100 Toulouse (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-B1- 6 246 501**

**Description**

La présente invention concerne le domaine de la télécommunication par satellite. L'invention concerne plus particulièrement un dispositif de communication inter-satellites pour satellites appartenant à une constellation de satellites.

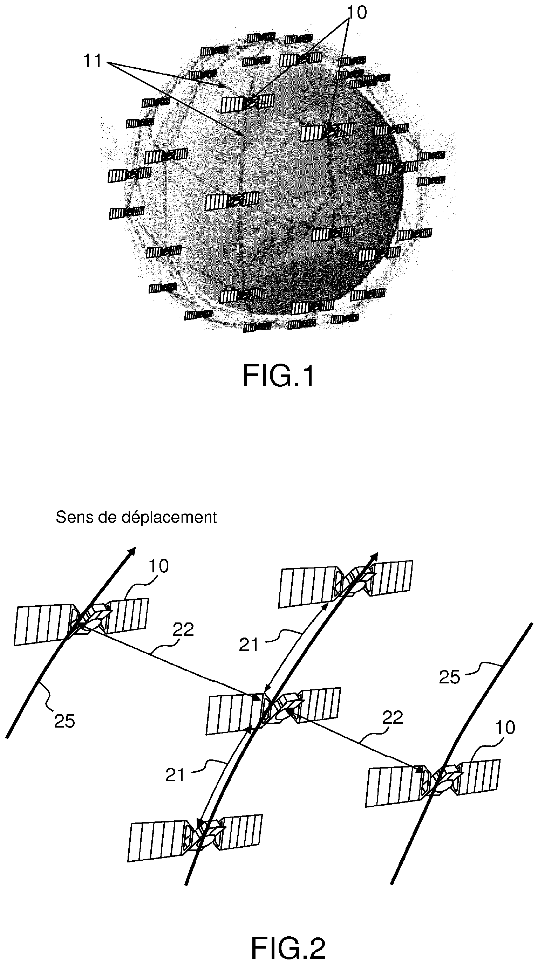

L'invention peut trouver son application dans les constellations de satellites nécessitant des liaisons entre des satellites d'un même plan orbital et/ou des liaisons entre des satellites appartenant à des plans orbitaux différents. A titre illustratif, la figure 1 représente un exemple de constellations de satellites 10 conforme à l'invention ainsi que leurs liaisons inter-satellites 11 (ou ISL pour « *Inter Satellite Link* » selon la terminologie anglo saxonne). De façon non limitative, il peut s'agir de constellations de satellites 10 de télécommunication en orbites non géostationnaires comme des orbites basses (ou LEO pour « *Low Earth Orbit* » selon la terminologie anglo saxonne) ou moyennes (également nommée MEO pour « *Medium Earth Orbit* » selon la terminologie anglo saxonne) devant fournir des connexions à très haut débit et à faible latence entre les utilisateurs au sol. Ces constellations sont construites à partir de plusieurs plans orbitaux, et dans chaque plan orbital, plusieurs satellites évoluent sur une orbite quasi circulaire. Les constellations de satellites peuvent être des constellations polaires ou quasi polaires dont les plans orbitaux passent par les deux pôles ou à proximité de ces derniers. Un tel système est divulgué par exemple dans le document US 6,246,501 B1.

La figure 2 est un agrandissement de la figure 1 illustrant des liaisons 11 entre les satellites à l'intérieur de la constellation. Ces liaisons 11 peuvent être entre satellites 10 appartenant à un même plan orbital 25, on parle alors de liaisons intra-plan 21 ou entre satellites 10 appartenant à des plans orbitaux 25 adjacents que l'on appelle liaisons inter-plans 22. Chaque satellite est ainsi en liaison avec un maximum de quatre satellites 10. Sur la figure 2, si on prend comme référence le sens de déplacement des satellites, un satellite 10 peut être en liaison avec les deux satellites voisins évoluant dans le même plan orbital devant et derrière lui et avec les deux satellites voisins évoluant dans les plans orbitaux 25 adjacents à droite et à gauche du satellite 10.

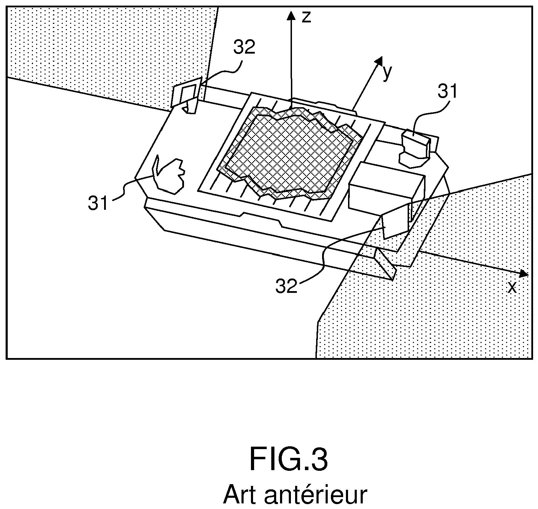

Afin d'établir les liaisons entre-eux, certains satellites 10 comprennent des terminaux de communication inter-satellites utilisant des technologies radiofréquences. Ces satellites 10 utilisent des antennes dédiées pour les communications intra-plan orbital 21 et inter-plans orbitaux 22. A titre illustratif, la figure 3 représente un exemple de mode de réalisation d'une plateforme 30 d'un tel satellite connue de l'art antérieur. Cette plateforme comprend deux antennes mobiles 32 pour les liaisons inter-plans 22 et deux antennes de faible mobilité 31 pour les liaisons intra-plan 21.

Ces liaisons inter-satellites 11, en technologie radiofréquence, posent plusieurs problèmes dans le cas d'une utilisation au sein d'une constellation polaire ou quasi polaire. Certains problèmes proviennent notamment du fait que l'angle azimutal d'une liaison inter-plan 22 varie constamment avec la latitude au cours de l'orbite et que la vitesse de variation de l'angle azimutal augmente fortement à mesure que les deux satellites approchent du pôle. D'autres problèmes proviennent du fait qu'il faut éviter les possibles interférences entre l'ensemble des faisceaux présents au pôle. En pratique, les liaisons inter-plans orbitaux 22 ne peuvent pas être maintenues pour des latitudes extrêmes, typiquement des latitudes supérieures à environ 60° et des latitudes inférieures à environ - 60° et doivent donc être interrompues. Les terminaux de communication inter-satellites sont placés et orientés de manière à établir des liaisons avec le satellite de droite ou de gauche (par rapport au sens de déplacement) et sont capables de pointer dans un secteur angulaire azimutal donné correspondant à ces latitudes. Les communications entre satellites de plans orbitaux 25 voisins ne sont donc plus disponibles au delà de ces valeurs de latitude lorsque les satellites traversent les régions des pôles.

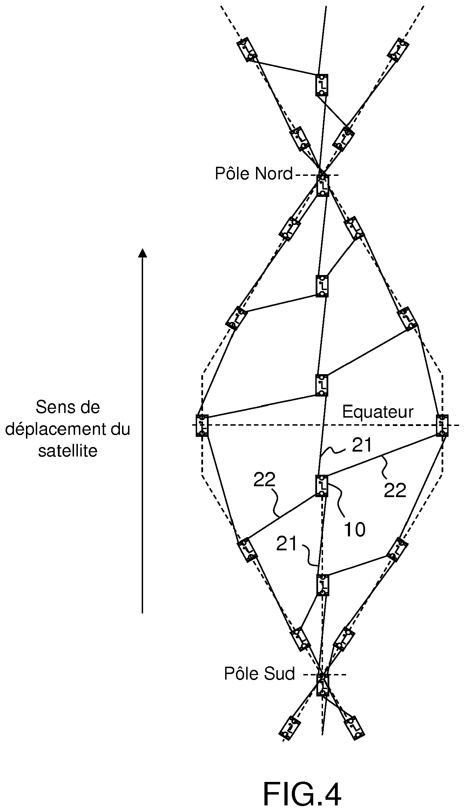

Une conséquence est qu'une nouvelle connexion inter-plans 21 doit être établie après le croisement du pôle et que cette connexion ne se fait pas avec le même satellite. En effet, en référence à la figure 4, si on considère un satellite 10 évoluant dans le plan orbital 25 central, ce satellite 10 est en liaison avec deux autres satellites 10 placés dans des plans orbitaux 25 voisins de part et d'autre du plan orbital 25 central. Dans la région des pôles, les plans orbitaux 25 se croisent et le satellite 10 qui se trouvait à droite du satellite considéré (en prenant comme sens de référence, le sens du déplacement des satellites et en considérant une vue de dessus par rapport à la Terre) va se retrouver à gauche du satellite considéré après passage du pôle. Il en est de même pour le satellite 10 qui se trouvait à gauche avant le passage du pôle. Dès que le satellite 10 a traversé la région des pôles, c'est-à-dire que sa latitude est supérieure à environ 60° ou inférieure à environ -60° suivant le pôle traversé, les terminaux de communication inter-satellites réacquièrent les liaisons inter-plans orbitaux 22 avec les satellites 10 du plan orbital 25 voisin. Cependant chaque terminal réacquiert la liaison 22 avec un satellite 10 différent par rapport au moment où ladite liaison 22 a été interrompue. Par exemple, le terminal de communication inter-satellites qui était positionné sur la plateforme pour être connecté avec le satellite de droite avant le passage du pôle devra réacquérir la liaison inter-plans 22 avec le nouveau satellite qui se trouve à sa droite et qui était à sa gauche auparavant. Ceci complique un peu plus la procédure, d'autant plus que ces opérations d'interruption et de réacquisition doivent être réalisées deux fois par orbite.

Un but de l'invention est notamment de corriger tout ou partie des inconvénients de l'art antérieur en proposant une solution permettant d'éviter d'interrompre les liaisons inter-plans orbitaux au niveau des pôles.

A cet effet, l'invention a pour objet un dispositif de communication pour satellites configurés pour évoluer au sein d'une constellation de satellites, un satellite comprenant une plateforme de satellite, ledit dispositif comprenant un groupe d'au moins un terminal optique dédié, en régime nominal, aux liaisons de communications intra-plan orbital et un groupe d'au moins un terminal optique dédié, en régime nominal, aux liaisons de communications inter-plans orbitaux, chaque terminal optique dédié aux communications intra-plan orbital étant configuré pour émettre et recevoir des signaux optiques avec un terminal optique d'un même satellite évoluant sur le même plan orbital, chaque terminal optique dédié aux communications inter-plans orbitaux étant configuré pour émettre et recevoir des signaux optiques avec un terminal optique d'un même satellite d'un plan orbital adjacent tout au long de sa révolution sur son plan orbital et chaque terminal optique dédié aux communications inter-plans orbitaux étant configuré et agencé au sein du dispositif de communication inter-satellites de façon a présenter un champ de regard tel que le demi-angle au sommet $\theta_m$ de ce dernier est supérieur à la valeur absolue maximale de l'angle azimutal $\theta$ de la liaison inter-plans orbitaux au cours d'une révolution autour de la Terre.

Suivant un mode de réalisation, le dispositif comprend au moins quatre terminaux optiques de liaison inter-satellites, un premier groupe de deux terminaux optiques étant situé à l'avant dudit satellite et un deuxième groupe de deux terminaux optiques étant situé à l'arrière dudit satellite, chaque groupe de terminaux optiques comprenant un terminal optique dédié, en régime nominal, aux liaisons de communications intra-plan orbital et un terminal optique dédié, en régime nominal, aux liaisons de communications inter-plans orbitaux, les deux terminaux optiques de liaison inter-satellites d'un même groupe étant séparés d'une distance prédéterminée de sorte que le faisceau optique de la liaison de communication inter-plans orbitaux ne soit jamais occulté par un autre terminal optique de la plateforme satellite au cours de son évolution sur le plan orbital.

Suivant un mode de réalisation, les deux terminaux optiques de chaque groupe sont placés dans une position symétrique par rapport à un axe parallèle à la direction de la trajectoire du satellite.

Suivant un mode de réalisation, les terminaux optiques sont identiques et interchangeables.

Suivant un mode de réalisation, les liaisons de communication intra-plan et inter-plans sont transmises et reçues sur une bande de longueur d'ondes divisée en deux sous-bandes, les terminaux optiques du premier groupe émettant des faisceaux optiques sur la première sous-bande et recevant des faisceaux optiques sur la deuxième sous-bande, les terminaux optiques du deuxième groupe émettant des faisceaux optiques sur la deuxième sous-bande et recevant des faisceaux optiques sur la première sous-bande.

Suivant un mode de réalisation, les liaisons de communication intra-plan et inter-plans sont transmises et reçues avec deux polarisations différentes, les terminaux optiques du premier groupe émettant des faisceaux optiques avec un premier type de polarisation et recevant des faisceaux optiques avec le deuxième type de polarisation, les terminaux optiques du deuxième groupe émettant des faisceaux optiques avec le deuxième type de polarisation et recevant des faisceaux optiques avec le premier type de polarisation.

Suivant un mode de réalisation, des faisceaux optiques sont émis et reçus sur la bande optique C.

Suivant un mode de réalisation, des faisceaux optiques sont émis et reçus sur la bande optique L.

Suivant un mode de réalisation, le satellite évolue selon une orbite non stationnaire.

L'invention a également pour objet un satellite configuré pour évoluer au sein d'une constellation de satellites répartie sur plusieurs plans orbitaux, ledit satellite comprenant une plateforme de satellite sur laquelle est disposé un dispositif de communication inter-satellites tel que décrit précédemment.

L'invention a également pour objet une constellation de satellites comprenant une pluralité de satellites tel que décrit précédemment.

Suivant un mode de réalisation, les satellites évoluent selon une orbite non stationnaire.

Suivant un mode de réalisation, les satellites évoluent selon une orbite basse.

Suivant un mode de réalisation, les satellites évoluent selon une orbite moyenne.

D'autres particularités et avantages de la présente invention apparaîtront plus clairement à la lecture de la description ci-après, donnée à titre illustratif et non limitatif, et faite en référence aux dessins annexés, sur lesquels :

- les figures 1 et 2, déjà présentées illustrent respectivement un exemple de constellation de satellites et un agrandissement de cette dernière ;

- la figure 3, déjà présentée, représente un exemple de mode de réalisation d'une plateforme de satellite connue de l'art antérieur ;

- la figure 4, déjà présentée, représente un exemple d'évolution des liaisons inter-satellites à l'aide de terminaux radiofréquences de liaison inter-satellites, connus de l'art antérieur, au voisinage d'un pôle ;

- les figures 5a et 5b représentent des exemples de mode de réalisation d'une plateforme de satellite selon l'invention ;

- la figure 5c est une représentation graphique de l'amplitude du champ de regard en fonction de la distance entre deux terminaux optiques ;

- la figure 6a est une représentation graphique de l'évolution de l'azimut d'une liaison inter-plans en fonction du temps ;

- la figure 6b illustre les différents angles entre deux satellites d'une même constellation ;

- la figure 6c est une représentation graphique de l'évolution de l'angle entre une liaison inter-plans et une liaison intra-plan d'un même satellite en fonction du temps ;

- la figure 7 illustre un exemple d'évolution des liaisons inter-satellites à l'aide de terminaux optiques de liaison inter-satellites au cours d'une demi-orbite entre une région autour du pôle sud et une région autour du pôle nord ;

- la figure 8 représente un exemple de mode de réalisation d'un terminal optique de liaison inter-satellite avec son électronique associée ;

- les figures 9a et 9b représentent respectivement un exemple d'allocation spectrale et un exemple d'utilisation de la bande spectrale par les satellites d'une constellation ;

- la figure 10 représente un exemple de mode de réalisation d'une plateforme de satellite selon l'invention.

Par la suite, on considèrera une vue de dessus, par rapport à la Terre, et on prendra pour référence le sens de déplacement des satellites pour désigner l'avant et l'arrière de ce dernier ainsi que sa droite et sa gauche.

Un dispositif de communication inter-satellites comprend au moins un terminal optique dédié, en régime nominal, aux liaisons de communications intra-plan orbital 21 et au moins un terminal optique dédié, en régime nominal, aux liaisons de communications inter-plans orbitaux 22. Chaque terminal optique dédié aux communications intra-plan orbital 21 est configuré pour émettre et recevoir des signaux optiques avec un terminal optique d'un même satellite 10 évoluant sur le même plan orbital 25 et chaque terminal optique dédié aux communications inter-plans orbitaux 22 est configuré pour émettre et recevoir des signaux optiques avec un terminal optique d'un même satellite 10 d'un plan orbital 25 adjacent tout au long de sa révolution sur son plan orbital 25.

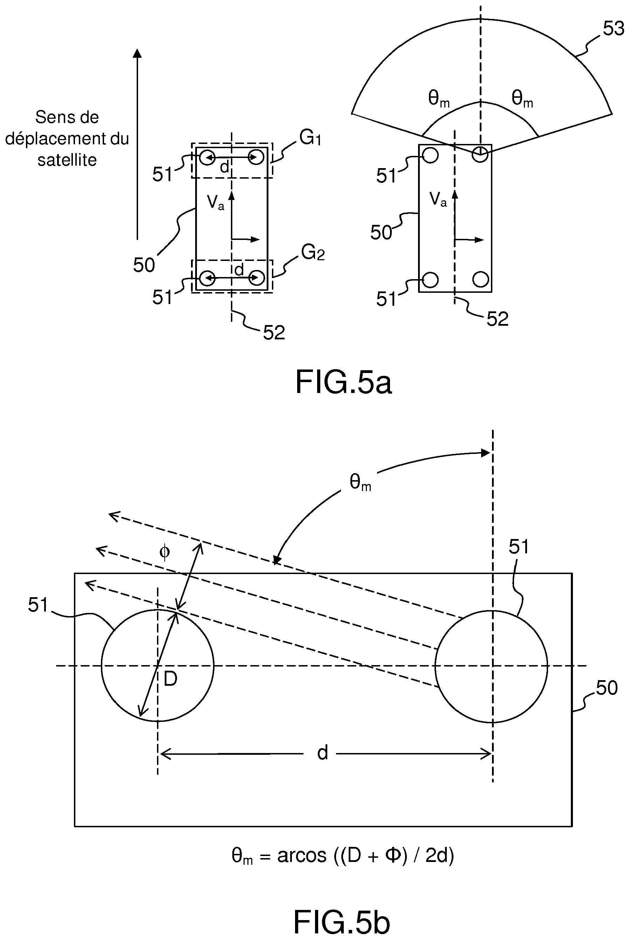

Les figures 5a et 5b représentent des exemples de mode de réalisation d'un dispositif de communication inter-satellite selon l'invention. Ce système peut être installé sur la plateforme 50 d'un satellite 10 de télécommunication, c'est-à-dire la structure rassemblant les éléments de navigation et de structure du satellite, ledit satellite étant configuré pour évoluer au sein d'une constellation de satellites. Cette constellation peut être une constellation polaire ou quasi polaire. La constellation comprend plusieurs plans orbitaux 25 et chaque plan orbital comprend plusieurs satellites 10.

Suivant un mode de réalisation, le dispositif de communication inter-satellites peut comprendre deux groupes G1, G2 de terminaux optiques 51 de liaison inter-satellites 11. Un premier groupe de deux terminaux optiques 51 peut être situé à l'avant de la plateforme 50 du satellite 10 et un deuxième groupe de terminaux 51 peut être situé à l'arrière de la plateforme 50 du satellite. Chaque groupe G1, G2 de terminaux optiques 51 comprend un terminal optique 51 configuré pour établir, en régime nominal une liaison de communication intra-plan orbital 21 entre le satellite 10 considéré et un autre satellite 10 adjacent évoluant dans le même plan orbital 25 ainsi qu'un terminal optique 51 de liaison inter-satellites 11 configuré pour établir, en régime nominal, une liaison de communication inter-plans orbitaux entre le satellite 10 considéré et un autre satellite 10 voisin évoluant dans un plan orbital 25 adjacent.

Le terminal optique 51 de liaison intra-plan 21 placé à l'avant de la plateforme du satellite 10 considéré est configuré pour établir une liaison de communication avec le terminal optique 51 du satellite 10 adjacent évoluant devant lui. De même, le terminal optique 51 de liaison intra-plan 21 placé à l'arrière de la plateforme du satellite considéré, pour établir une liaison de communication avec le terminal optique 51 de liaison intra-plan 21 du satellite adjacent évoluant derrière lui.

Suivant un mode de réalisation préférentiel, les deux terminaux optiques 51 de liaison inter-satellites 11 de chaque groupe G1, G2 sont placés dans une position sensiblement symétrique par rapport à un axe 52 parallèle à la direction de la trajectoire du satellite 10 et passant par le centre de la plateforme 50. De façon avantageuse, cette disposition particulière des terminaux 51 permet à ces derniers d'être redondants et donc d'effectuer les même fonctions. De plus, cela permet aux terminaux 51 d'avoir le même champ de regard 53.

Cette redondance peut également être obtenue pour des positions légèrement disymétriques des terminaux 51.

Sur les figures 5a et 5b, les terminaux optiques 51 d'un même groupe G1, G2, sont alignés suivant un axe sensiblement perpendiculaire à la direction de déplacement du satellite. Cette configuration n'est nullement limitative et ces terminaux peuvent être décalés par rapport un axe sensiblement perpendiculaire à la direction de déplacement du satellite.

Les deux terminaux 51 de chaque groupe G1, G2 peuvent être espacés d'une distance d prédéterminée. La valeur de cette distance d est choisie de sorte que la liaison de communication entre le terminal optique 51 de liaison inter-plans 22 considéré et le terminal optique 51 du satellite adjacent avec lequel il est en liaison ne soit jamais masqué et donc jamais interrompue quelle que soit la position dudit satellite 10 voisin du plan orbital 25 adjacent.

En référence à la figure 5b, si on considère que le terminal optique 51 est défini par une enveloppe cylindrique, le demi-angle au sommet $\theta_m$ du champ de regard 53 du terminal optique, par rapport à une droite parallèle à la direction de la trajectoire du satellite 10, est donné en fonction de la distance d séparant les deux terminaux optiques, de leur diamètre extérieur D et du diamètre $\phi$ du faisceau optique par l'expression :

$$\theta_m = \arccos\left((D + \phi) / 2d\right).$$

La valeur de la distance d séparant les deux terminaux optiques 51 est choisie notamment en fonction de l'orbite, du nombre de plans orbitaux 25 de la constellation et du nombre de satellites 10 par plan orbitaux 25. La valeur de cette distance d peut être déterminée de sorte que le champ de regard 53 du terminal optique 51 de liaison inter-plans soit le plus large possible et de sorte que ledit champ de regard 53 permette audit terminal optique 51 de maintenir sa liaison avec le satellite voisin notamment dans la région des pôles lorsque ledit satellite 10 voisin du plan orbital 25 adjacent passe d'un coté à un autre du satellite 10 considéré.

Cette position particulière des terminaux optiques 51 de liaison inter-satellites 11 permet de maintenir toutes les liaisons intra-plan 21 et inter-plans 22 sans coupure notamment lors du croisement des satellites 10 aux pôles. Cela évite d'avoir à réacquérir la liaison inter-plans 22 après la traversée des régions polaires. Cela évite également d'avoir à mettre à jour en permanence la connectivité de la constellation. Chaque satellite 10 reste connecté aux même satellites par les mêmes terminaux optiques 51 tout au long de son orbite.

De plus, chaque satellite 10 de la constellation est toujours en relation avec les même satellites 10 et ainsi la connectivité de l'ensemble du système reste toujours la même. De plus, le fait de maintenir les liaisons inter-satellites 11 sans coupure permet de toujours garantir un débit maximal pour le trafic, les communications entre les abonnés au sol.

Un autre avantage du dispositif de communication inter-satellites 11 selon l'invention réside dans le fait que les deux terminaux optiques 51 de liaison inter-satellites 11 de chaque groupe G1, G2 sont identiques et donc interchangeables. Chacun des deux terminaux optiques 51 peut être configuré pour fonctionner aussi bien en terminal de liaison inter-plans 22 qu'en terminal de liaison intra-plan 21. Ainsi, lorsqu'un des deux terminaux optiques 51 tombe en panne, le terminal optique restant peut être reconfiguré pour remplacer le terminal optique 51 défaillant si ce dernier a une fonction plus critique. De plus, comme les deux terminaux optiques 51 sont identiques, ce changement de fonction peut être fait de façon logicielle et donc sans reconfiguration matérielle. Ceci permet une reconfiguration plus souple et plus légère qui peut être réalisée par télécommande à partir du sol.

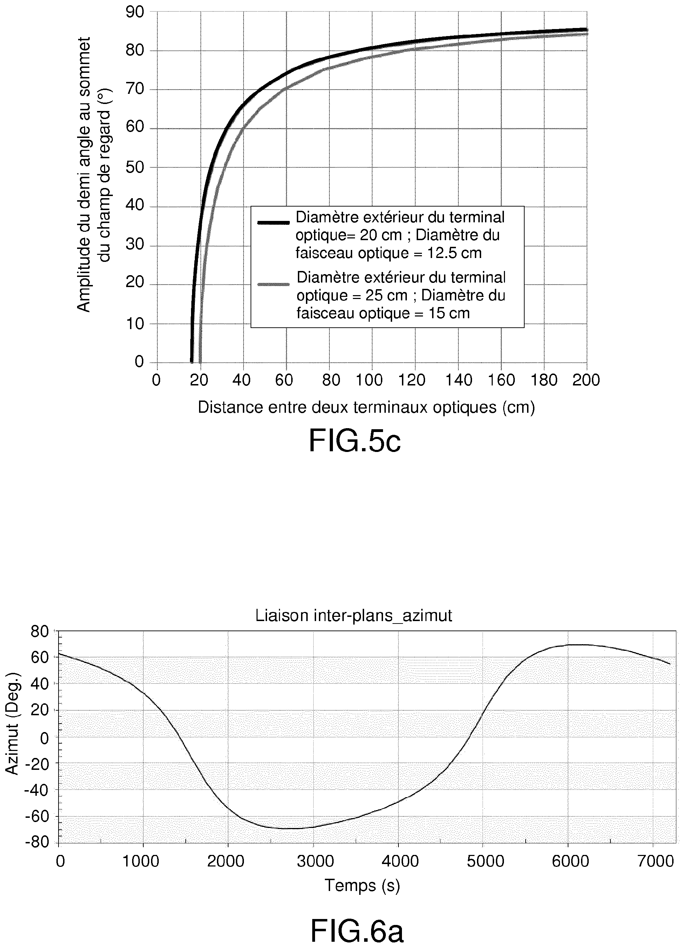

A titre illustratif, la figure 5c représente la valeur de l'amplitude du demi angle au sommet $\theta_m$ du champ de regard en fonction de la distance entre deux terminaux optiques 51 pour deux configurations particulière. Dans une première configuration, le diamètre extérieur D du terminal optique 51 est de 20cm et le diamètre $\phi$ du faisceau optique est de 12,5cm. Selon une seconde configuration, le diamètre extérieur D du terminal optique 51 est de 25cm et le diamètre $\phi$ du faisceau optique est de 15cm.

La figure 6a est une représentation graphique illustrant l'évolution, en fonction du temps, de l'azimut d'une liaison inter-plans 22 pour une constellation donnée possédant plusieurs plans orbitaux 25 et plusieurs satellites 10 par plan orbital 25, l'angle azimutal est défini par rapport au sens de déplacement des satellites. Dans cet exemple, chaque satellite 10 parcourt son orbite pendant un intervalle de temps T d'environ 110 minutes et l'azimut $\theta$ évolue entre environ -75° et +75°. Ainsi, pour cette configuration, le champ de regard 53 du terminal optique 51 de liaison inter-plans 22 doit donc au moins couvrir cette plage de valeurs. L'azimut de la liaison inter-plans 22 passe par zéro lorsque les satellites 10 se croisent aux pôles et par des extrema lorsque le satellite 10 passe par l'équateur.

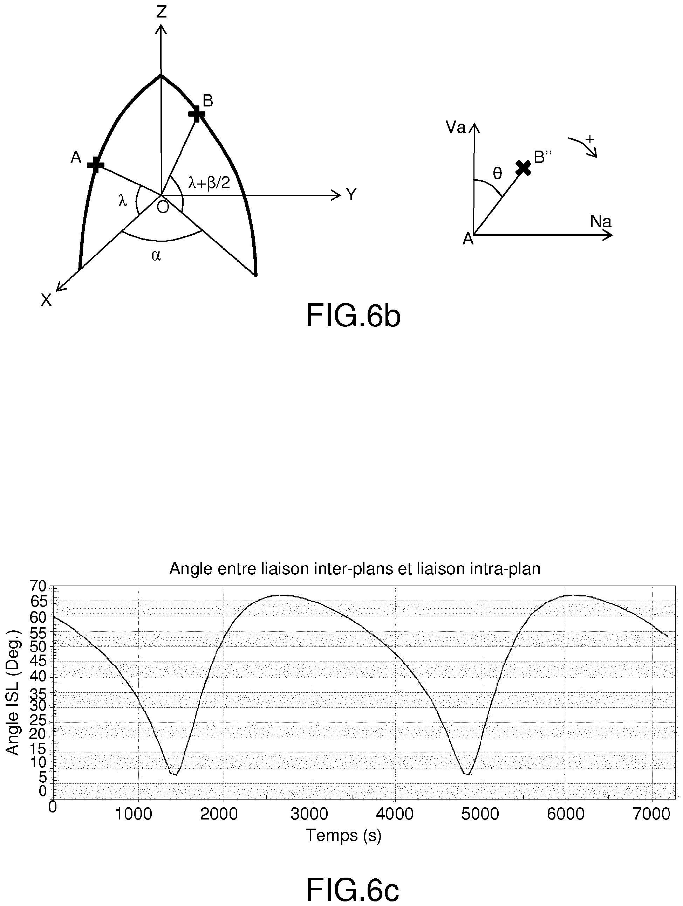

En référence à la figure 6b, dans le cas de satellites d'une même constellation, étant à la même altitude, sur des plans différents, avec une inclinaison exactement polaire, on peut donner une expression analytique de l'angle azimutal.

Pour cela, on considère deux satellites situés aux positions A et B, dans deux plans orbitaux consécutifs séparés d'un angle $\alpha$, et on considère $\beta/2$ l'angle de phasage entre satellites. On définit le repère lié à l'orbite du satellite A par :

O : Centre Terre,
X : direction du Noeud Ascendant A,
Y : normale à l'orbite,
Z : normale au plan (X,Y).

Si on définit le plan (A, Va,Na), dans lequel Va représente la vitesse du satellite A et Na représente la normale à l'orbite en A, et si on définit B" comme étant la projection de B dans le plan (A, Va, Na), l'angle d'azimut, noté $\theta$, entre Va et (AB"), angle définissant la direction selon laquelle le satellite B est vu par le satellite A, est alors donné par l'expression suivante :

$$\tan(\theta) = \frac{\cos(\lambda + \beta/2) * \sin(\alpha)}{\cos(\lambda) * \sin(\lambda + \beta/2) - \sin(\lambda) * \cos(\lambda + \beta/2) * \cos(\alpha)}$$

dans laquelle :

- a est l'angle de séparation entre plans orbitaux, autrement dit l'angle, dans le plan équatorial (X, Y), entre deux plans orbitaux voisins,
- β/2 est l'angle de phasage entre les premiers satellites de deux plans consécutifs,
- À est la position sur orbite du satellite A.

Considérant l'expression précédente qui définit l'angle d'azimut $\theta$, il est à noter, comme l'illustre la figure 6a, qu'au cours d'une révolution autour de la Terre, l'azimut $\theta$ varie entre une valeur maximale $\theta_{Max}$ et une valeur minimale $\theta_{Min}$ qui sont fonction des positions dévolues aux différents satellites au sein de la constellation.

Par suite, il est ainsi possible de déterminer les valeurs des paramètres de dimensionnement du dispositif de communication inter-satellite selon l'invention définis précédemment, à savoir la distance d séparant les deux terminaux optiques d'un même groupe (G1 ou G2), leur diamètre extérieur D et le diamètre $\phi$ du faisceau optique, de sorte que le demi-angle au sommet $\theta_m$ du champ de regard soit toujours supérieur à l'angle azimutal maximal.

Ainsi, dans le cas d'une constellation correspondant à l'exemple de la figure 6a chaque terminal optique 51 dédié aux communications inter-plans orbitaux 22 peut, par exemple, présenter un champ de regard tel que le demi-angle au sommet $\theta_m$ de ce dernier, par rapport à une droite parallèle à la direction de la trajectoire du satellite 10, soit supérieur à l'angle azimutal maximal tout en restant inférieur à environ 80°. C'est par exemple le cas dans l'une ou l'autre des configurations illustrées par la figure 5c.

La figure 6c illustre l'évolution, en fonction du temps, de l'angle entre le faisceau optique d'une liaison intra-plan et celui d'une liaison inter-plans pour un même satellite 10 dans une configuration identique à la configuration précédente. Cet angle a une valeur maximale lorsque le satellite 10 se situe au niveau de l'équateur et a une valeur minimale lorsque le satellite 10 du plan orbital 25 voisin croise le satellite considéré dans la région des pôles. Le graphique montre que pour cette configuration, quelle que soit la position du satellite 10 considéré sur son orbite la mesure de l'angle entre une liaison intra-plan 21 et une liaison inter-plans 22 n'est jamais inférieure à une valeur comprise entre 5° et 10°. Compte tenu de la divergence des faisceaux optiques des terminaux 51 de liaison inter-satellites 11, qui est de l'ordre de quelques microradians à quelques dizaines de microradians, cet écart est suffisant pour que les faisceaux optiques ne soient pas colinéaires et donc n'interfèrent pas entre eux. Ainsi, les deux liaisons 21, 22 peuvent être maintenues ensemble dans les régions autour des pôles sans que les liaisons intra-plan et inter-plans n'interfèrent entre elles.

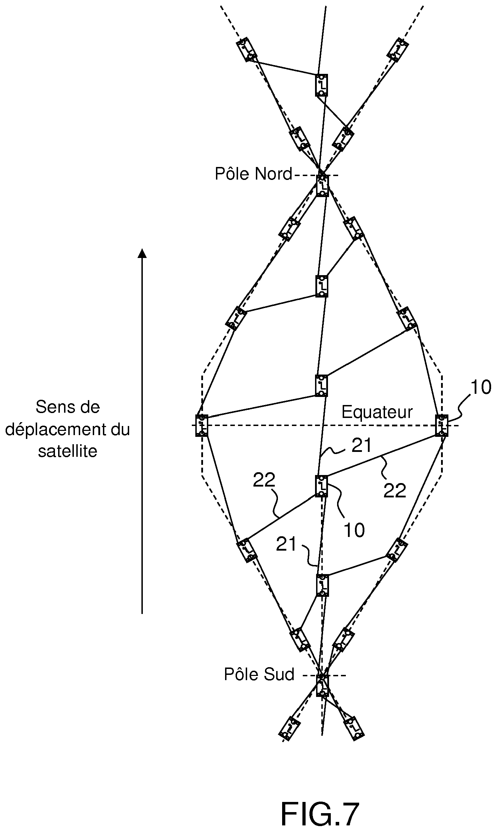

La figure 7 illustre un exemple d'évolution des liaisons inter-satellites 11 à l'aide de terminaux optiques 51 de liaison inter-satellites selon l'invention au cours d'une demi-orbite entre une région autour du pôle sud et une région autour du pôle nord.

De façon avantageuse, lorsque le satellite 10 traverse un pôle, les liaisons inter-satellites 11 sont toujours maintenues. Ainsi, il n'est pas nécessaire d'interrompre la connexion inter-plans orbitaux lorsque le satellite s'approche de la région d'un pôle et ensuite de la réacquérir lorsqu'il sort de cette région. Ainsi, on évite d'avoir à dérouler une phase de pointage et d'acquisition qui peut être longue, avec une probabilité d'échec lors du rétablissement de la liaison qui n'est pas nulle, ce qui peut encore allonger la procédure. On évite également d'avoir à échanger des informations comme la position relative des satellites, les éphémérides etc...

Il n'y a pas besoin de mettre à jour en permanence la connectivité de la constellation à chaque passage d'un pôle et chaque terminal optique 51 reste toujours connecté au même terminal optique 51 du satellite 10 voisin. Cela peut permettre de simplifier l'architecture du terminal optique 51 et/ou des équipements qui lui sont associés et donc réduire leur coût.

De même, le fait que les liaisons inter-satellites 11 soient maintenues quelle que soit la position du satellite 10 sur son orbite permet à la constellation de toujours fournir un débit maximum pour les communications entre les abonnés au sol.

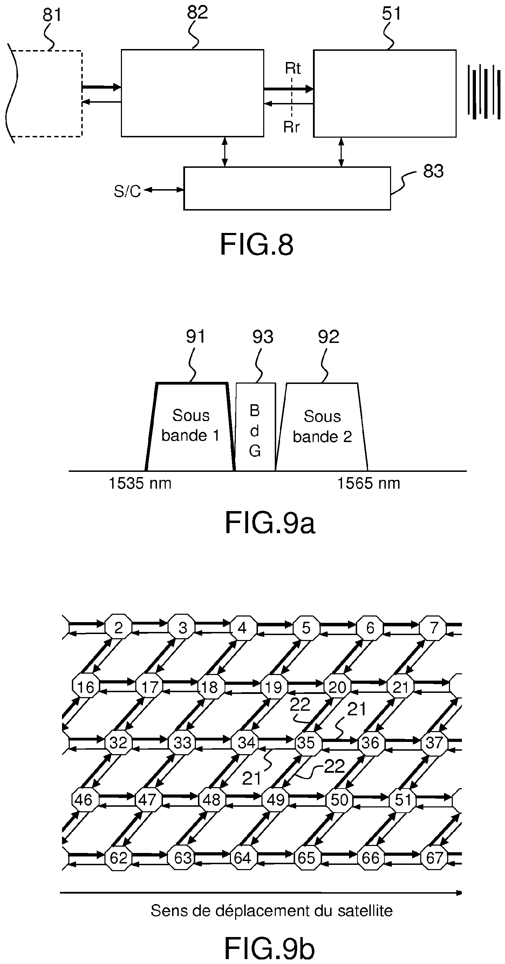

La figure 8 est une représentation fonctionnelle possible d'un terminal optique 51 de liaison inter-satellites 11 selon l'invention ainsi que de l'équipement électronique avec lequel il coopère. L'ensemble peut comprendre un processeur de télécommunication 81 (ou OBP pour « *On Bord Processor* » selon la terminologie anglo saxonne) configuré pour délivrer les signaux de télécommunication que doit émettre le terminal optique 51 de liaison inter-satellites 11 et réceptionner les signaux que reçoit ledit terminal optique 51. Ce processeur 81 peut être connecté avec une unité de communication laser 82 configurée pour transférer les signaux sous forme optique. Cette unité 82 peut comprendre des éléments d'émission et de réception optique, des éléments d'amplification, de pré amplification, de détection, de modulation, de démodulation, de multiplexage, de démultiplexage .... L'unité de communication laser est elle-même connectée au terminal optique 51 de liaison inter-satellites. Le terminal 51 comprend la tête optique et les sous-ensembles de pointage de faisceau, de déflexion et d'orientation pour l'acquisition et la poursuite (ou PAT pour « *Pointing, Acquisition and Tracking* » selon la terminologie anglo saxonne) du terminal optique 51 avec lequel il communique. Pour piloter l'unité de communication laser 82 et le terminal optique 51 l'ensemble comprend une unité de contrôle 83. Cette unité de contrôle 83 est configurée pour réaliser l'interface entre ces unités et le calculateur bord, pour gérer les alimentations et coordonner les actions des différentes unités. Par ailleurs, il existe différentes façons d'organiser ces fonctions en unités matérielles. Par exemple, l'unité de contrôle peut être commune à plusieurs terminaux optiques et donc contrôler plusieurs têtes optiques et plusieurs unités de communication laser.

La figure 9a représente un exemple d'allocation spectrale en longueur d'onde pour les terminaux optiques d'un dispositif de communication inter satellites selon l'invention. Les terminaux optiques 51 peuvent utiliser les bandes optiques C ou L. Chaque terminal optique 51 de liaison inter-satellites 11 réalisant des liaisons bidirectionnelles, la bande spectrale utilisée peut être séparée en deux parties, en deux sous-bandes 91, 92. Une bande de garde 93 est laissée libre entre les deux sous-bandes afin d'éviter toute interférence.

Suivant une variante de mise en oeuvre, les deux sous-bandes 91, 92 peuvent utiliser des polarisations différentes. Par exemple, une première sous-bande peut utiliser une polarisation droite et la deuxième sous-bande une polarisation gauche ou une polarisation horizontale et une polarisation verticale.

Les terminaux optiques 51 du dispositif de communication inter-satellites selon l'invention peuvent émettre et recevoir les faisceaux optiques de façon différente. A titre d'exemple, les terminaux optiques 51 d'un premier groupe G1, G2 de terminaux peut utiliser une première sous-bande 91, 92 en émission et la deuxième sous-bande en réception. Les terminaux du deuxième groupe quant à eux utilisent la deuxième sous-bande 92 en émission et la première sous-bande 91 en réception.

Suivant un mode de mise en oeuvre, les terminaux optiques 51 du premier groupe G1 de terminaux utilisent un premier type de polarisation en émission et un deuxième type de polarisation en réception, les terminaux du deuxième groupe G2 utilisant le deuxième type de polarisation en émission et le premier type de polarisation en réception.

La figure 9b illustre un exemple d'utilisation des sous-bandes 91, 92 par les satellites à l'intérieur d'une constellation. Si on considère par exemple le satellite numéro 35, les terminaux optiques placés à l'avant de la plateforme émettent en utilisant la première sous-bande 91 et ceux du groupe placé à l'arrière de la plateforme émettent en utilisant la deuxième sous-bande 92. A la réception, les terminaux optiques placés à l'avant utilisent la deuxième sous-bande 92 et ceux placés à l'arrière utilisent la première sous-bande 91.

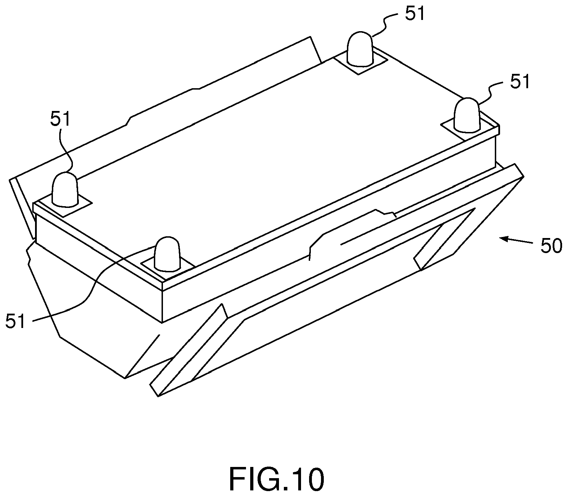

L'invention a également pour objet un satellite 10, par exemple de télécommunication, comprenant une plateforme 50 satellite sur laquelle est disposé un dispositif de communication inter-satellites tel que décrit précédemment. A titre illustratif, la figure 10 représente un exemple de mode de réalisation d'une plateforme d'un tel satellite selon l'invention. Dans cet exemple nullement limitatif, les quatre terminaux de liaison inter-satellites sont placés aux quatre coins de la plateforme 30 de façon à maximiser le champ de regard 53 des terminaux configurés pour les liaisons inter-plans orbitaux.

Ces satellites peuvent être configurés pour évoluer selon une orbite non géostationnaire. Il peut s'agir par exemple d'une orbite basse, typiquement une orbite inférieure à environ 2 000 kilomètres d'altitude, ou d'une orbite moyenne c'est-à-dire une orbite comprise entre 2 000 et 36 000 kilomètres d'altitude.

Un autre objet de l'invention est une constellation de satellites 10 conforme à l'invention. Cette constellation polaire ou quasi polaire comprend plusieurs plans orbitaux 25 se croisant dans la région des pôles, chaque plan 25 comprenant plusieurs satellites 10 connectés entre eux par des liaisons optiques intra-plan 21 et/ou inter-plans 22.

## Revendications

1. Dispositif de communication inter-satellites pour satellites (10) configurés pour évoluer au sein d'une constellation de satellites, un satellite (10) comprenant une plateforme (50) de satellite,
   ledit dispositif comportant au moins un terminal optique (51) dédié, en régime nominal, aux liaisons de communications intra-plan orbital (21) et au moins un terminal optique (51) dédié, en régime nominal, aux liaisons de communications inter-plans orbitaux (22),
   un terminal optique (51) dédié aux communications intra-plan orbital (21) étant configuré pour émettre et recevoir des signaux optiques avec un terminal optique (51) d'un même satellite (10) évoluant sur le même plan orbital (25),
   un terminal optique (51) dédié aux communications inter-plans orbitaux (22) étant configuré pour émettre et recevoir des signaux optiques avec un terminal optique (51) d'un même satellite (10) d'un plan orbital (25) adjacent tout au long de sa révolution sur son plan orbital (25) et
   ledit dispositif étant **caractérisé en ce que**, chaque terminal optique (51) étant défini par une enveloppe cylindrique de diamètre extérieur D, et le demi-angle au sommet $\theta_m$ du champ de regard 53 du terminal optique, par rapport à une droite (52) parallèle à la direction de la trajectoire du satellite (10), étant défini en fonction, du diamètre extérieur D et du diamètre $\phi$ du faisceau optique par l'expression :

$$\theta_m = arcos\,((D + \phi)\,/\,2d),$$

la distance d séparant les deux terminaux optiques est définie de façon à ce que le demi-angle au sommet $\theta_m$ soit supérieur à la valeur absolue maximale de l'angle azimutal $\theta$ au cours d'une révolution autour de la Terre.

2. Dispositif selon la revendication 1, dans lequel ledit dispositif comprend au moins quatre terminaux optiques (51) de liaison inter-satellites (11), lesdits terminaux formant un premier groupe (G1) de deux terminaux optiques (51) situé à l'avant dudit satellite (10) et un deuxième groupe (G2) de deux terminaux optiques (51) situé à l'arrière dudit satellite (10),
chaque groupe (G1, G2) de terminaux optiques comprenant un terminal optique (51) dédié, en régime nominal, aux liaisons de communications intra-plan orbital (21) et un terminal optique (51) dédié, en régime nominal, aux liaisons de communications inter-plans orbitaux (22),
les deux terminaux optiques formant un même groupe (G1, G2) étant alignés suivant un axe sensiblement perpendiculaire à la direction de déplacement du satellite.

3. Dispositif selon une des revendications précédentes dans lequel les deux terminaux optiques (51) de chaque groupe (G1, G2) sont placés dans une position symétrique par rapport à un axe (52) parallèle à la direction de la trajectoire du satellite (10) et passant par le centre de la plateforme (50).

4. Dispositif selon une des revendications précédentes dans lequel les terminaux optiques (51) sont identiques et interchangeables.

5. Dispositif selon une des revendications précédentes dans lequel les liaisons de communication intra-plan (21) et inter-plans (22) sont transmises et reçues sur une bande de longueur d'ondes divisée en deux sous-bandes (91, 92), les terminaux optiques (51) du premier groupe (G1) émettant des faisceaux optiques sur la première sous-bande (91) et recevant des faisceaux optiques sur la deuxième sous-bande (92), les terminaux optiques (51) du deuxième groupe (G2) émettant des faisceaux optiques sur la deuxième sous-bande (92) et recevant des faisceaux optiques sur la première sous-bande (91).

6. Dispositif selon une des revendications 1 à 4 dans lequel les liaisons de communication intra-plan (21) et inter-plans (22) sont transmises et reçues avec deux polarisations différentes, les terminaux optiques (51) du premier groupe (G1) émettant des faisceaux optiques avec un premier type de polarisation et recevant des faisceaux optiques avec le deuxième type de polarisation, les terminaux optiques (51) du deuxième groupe (G2) émettant des faisceaux optiques avec le deuxième type de polarisation et recevant des faisceaux optiques avec le premier type de polarisation.

7. Dispositif selon une des revendications précédentes dans lequel des faisceaux optiques sont émis et reçus sur la bande optique C.

8. Dispositif selon une des revendications 1 à 6 dans lequel des faisceaux optiques sont émis et reçus sur la bande optique L.

9. Dispositif selon une des revendications précédentes dans lequel le satellite évolue selon une orbite non stationnaire.

10. Satellite (10) configuré pour évoluer au sein d'une constellation de satellites (10) répartie sur plusieurs plans orbitaux **caractérisé en ce qu'**il comprend une plateforme (50) de satellite sur laquelle est disposé un dispositif de communication inter-satellites selon une des revendications précédentes.

11. Constellation de satellites **caractérisée en ce qu'**elle comprend une pluralité de satellites (10) selon la revendication précédente.

12. Constellation selon la revendication précédente dans laquelle lesdits satellites (10) évoluent selon une orbite non stationnaire.

13. Constellation selon une des revendications 11 ou 12 dans laquelle lesdits satellites (10) évoluent selon une orbite basse.

14. Constellation selon une des revendications 11 ou 12 dans laquelle lesdits satellites (10) évoluent selon une orbite moyenne.

**Patentansprüche**

1. Intersatellitäre Kommunikationsvorrichtung für Satelliten (10), die dazu konfiguriert sind, innerhalb einer Satellitenkonstellation zu kreisen, wobei ein Satellit (10) eine Satellitenplattform (50) umfasst, wobei die Vorrichtung mindestens ein optisches Endgerät (51), das im Nennbetrieb für Intra-Orbitalebenen-Kommunikationsverbindungen (21) dediziert ist, und mindestens ein optisches Endgerät (51), das im Nennbetrieb für Inter-Orbitalebenen-Kommunikationsverbindungen (22) dediziert ist, umfasst, wobei ein für Intra-Orbitalebenen-Kommunikationsverbindungen (21) dediziertes optisches Endgerät (51) dazu konfiguriert ist, optische Signale mit einem optischen Endgerät (51) eines gleichen Satelliten (10), der in derselben Orbitalebene (25) kreist, zu senden und zu empfangen, wobei ein für Inter-Orbitalebenen-Kommunikationsverbindungen (22) dediziertes optisches Endgerät (51) dazu konfiguriert ist, optische Signale mit einem optischen Endgerät (51) eines gleichen Satelliten (10) einer benachbarten Orbitalebene (25) entlang seiner gesamten Umdrehung um seine Orbitalebene (25) zu senden und zu empfangen, und wobei die Vorrichtung **dadurch gekennzeichnet ist, dass**, wenn jedes optische Endgerät (51) durch einen zylindrischen Mantel mit dem Außendurchmesser D definiert ist und der halbe Öffnungswinkel $\theta_m$ des Sichtfeldes 53 des optischen Endgeräts in Bezug auf eine Gerade (52) parallel zur Richtung der Bahn des Satelliten (10) in Abhängigkeit vom Außendurchmesser D und vom Durchmesser $\phi$ des optischen Strahls durch den Ausdruck

$$\theta_m = arccos \ ((D + \phi) \ / \ 2d)$$

definiert ist, der Abstand d zwischen den beiden optischen Endgeräten so definiert ist, dass der halbe Öffnungswinkel $\theta_m$ größer ist als der maximale Absolutwert des azimutalen Winkels $\theta$ während einer Umdrehung um die Erde.

2. Vorrichtung nach Anspruch 1, wobei die Vorrichtung mindestens vier optische Endgeräte (51) für intersatellitäre Verbindungen (11) umfasst, wobei die Endgeräte eine erste Gruppe (G1) aus zwei optischen Endgeräten (51) bilden, die an der Vorderseite des Satelliten (10) gelegen ist, und eine zweite Gruppe (G2) aus zwei optischen Endgeräten (51), die auf der Rückseite des Satelliten (10) gelegen ist, wobei jede Gruppe (G1, G2) optischer Endgeräte ein optisches Endgerät (51), das im Nennbetrieb für Intra-Orbitalebenen-Kommunikationsverbindungen (21) dediziert ist, und ein optisches Endgerät (51), das im Nennbetrieb für Inter-Orbitalebenen-Kommunikationsverbindungen (22) dediziert ist, umfasst, wobei die beiden Endgeräte, die eine selbe Gruppe (G1, G2) bilden, entlang einer Achse ausgerichtet sind, die im Wesentlichen senkrecht zur Bewegungsrichtung des Satelliten verläuft.

3. Vorrichtung nach einem der vorhergehenden Ansprüche, wobei die beiden optischen Endgeräte (51) jeder Gruppe (G1, G2) in einer symmetrischen Position in Bezug auf eine Achse (52) platziert sind, die parallel zur Richtung der Bahn des Satelliten (10) liegt und durch den Mittelpunkt der Plattform (50) verläuft.

4. Vorrichtung nach einem der vorhergehenden Ansprüche, wobei die optischen Endgeräte (51) identisch und austauschbar sind.

5. Vorrichtung nach einem der vorhergehenden Ansprüche, wobei die Intra-Ebenen-Kommunikationsverbindungen (21) und die Inter-Ebenen-Kommunikationsverbindungen (22) über ein Wellenlängenband gesendet und empfangen werden, das in zwei Teilbänder (91, 92) geteilt ist, wobei die optischen Endgeräte (51) der ersten Gruppe (G1) optische Strahlen über das erste Teilband (91) senden und optische Strahlen über das zweite Teilband (92) empfangen, wobei die optischen Endgeräte (51) der zweiten Gruppe (G2) optische Strahlen über das zweite Teilband (92) senden und optische Strahlen über das erste Teilband (91) empfangen.

**6.** Vorrichtung nach einem der Ansprüche 1 bis 4, wobei die Intra-Ebenen-Kommunikationsverbindungen (21) und die Inter-Ebenen-Kommunikationsverbindungen (22) mit zwei verschiedenen Polarisationen gesendet und empfangen werden, wobei die optischen Endgeräte (51) der ersten Gruppe (G1) optische Strahlen mit einer ersten Polarisationsart senden und optische Strahlen mit einer zweiten Polarisationsart empfangen, wobei die optischen Endgeräte (51) der zweiten Gruppe (G2) optische Strahlen mit der zweiten Polarisationsart senden und optische Strahlen mit der ersten Polarisationsart empfangen.

**7.** Vorrichtung nach einem der vorhergehenden Ansprüche, wobei optische Strahlen über das optische C-Band gesendet und empfangen werden.

**8.** Vorrichtung nach einem der Ansprüche 1 bis 6, wobei optische Strahlen über das optische L-Band gesendet und empfangen werden.

**9.** Vorrichtung nach einem der vorhergehenden Ansprüche, wobei der Satellit entlang eines nicht stationären Orbits kreist.

**10.** Satellit (10), der dazu konfiguriert ist, innerhalb einer Satellitenkonstellation (10) zu kreisen, die auf mehrere Orbitalebenen verteilt ist, **dadurch gekennzeichnet, dass** er eine Satellitenplattform (50) umfasst, auf der eine intersatellitäre Kommunikationsvorrichtung nach einem der vorhergehenden Ansprüche angeordnet ist.

**11.** Satellitenkonstellation, **dadurch gekennzeichnet, dass** sie eine Mehrzahl von Satelliten (10) nach dem vorhergehenden Anspruch umfasst.

**12.** Konstellation nach dem vorhergehenden Anspruch, wobei die Satelliten (10) entlang eines nicht stationären Orbits kreisen.

**13.** Konstellation nach einem der Ansprüche 11 oder 12, wobei die Satelliten (10) entlang eines niedrigen Orbits kreisen.

**14.** Konstellation nach einem der Ansprüche 11 oder 12, wobei die Satelliten (10) entlang eines mittleren Orbits kreisen.

## Claims

**1.** Inter-satellite communication device for satellites (10) configured to orbit within a constellation of satellites, a satellite (10) comprising a satellite platform (50),
said device comprising at least one optical terminal (51) dedicated, under nominal Operation, to intra-orbital plane communication links (21) and at least one optical terminal (51) dedicated, under nominal operation, to inter-orbital plane communication links (22),
an optical terminal (51) dedicated to intra-orbital plane communications (21) being configured to transmit and receive optical signals with an optical terminal (51) of an identical satellite (10) orbiting in the same orbital plane (25),
an optical terminal (51) dedicated to inter-orbital plane communications (22) being configured to transmit and receive optical signals with an optical terminal (51) of an identical satellite (10) in an orbital plane (25) that is adjacent over the entirety of its orbit in its orbital plane (25) and
said device being **characterized in that**, each optical terminal (51) being defined by a cylindrical envelope of external diameter D, and the half-angle at the vertex $\theta_m$ of the field of view 53 of the optical terminal, with respect to a straight line (52) that is parallel to the direction of the trajectory of the satellite (10), being defined as a function of the external diameter D and of the diameter $\phi$ of the optical beam by the expression:

$$\theta_m = \arccos\ ((D + \phi)\ /\ 2d),$$

the distance d separating the two optical terminals is defined such that the half-angle at the vertex $\theta_m$ be greater than the absolute maximum value of the azimuthalangle $\theta$ during an orbit about the Earth.

**2.** Device according to Claim 1, in which said device comprises at least four optical inter-satellite link (11) terminals (51), said terminals forming a first group (G1) of two optical terminals (51) located at the front of said satellite (10) and a second group (G2) of two optical terminals (51) located at the rear of said satellite (10),

each group (G1, G2) of optical terminals comprising one optical terminal (51) dedicated, under nominal operation, to intra-orbital plane communication links (21) and one optical terminal (51) dedicated, under nominal operation, to inter-orbital plane communication links (22),

the two optical terminals forming one and the same group (G1, G2) being aligned along an axis that is substantially perpendicular to the direction of movement of the satellite.

3. Device according to one of the preceding claims, in which the two optical terminals (51) of each group (G1, G2) are placed in a position that is symmetrical with respect to an axis (52) that is parallel to the direction of the trajectory of the satellite (10) and passes through the centre of the platform (50).

4. Device according to one of the preceding claims, in which the optical terminals (51) are identical and interchangeable.

5. Device according to one of the preceding claims, in which the intra-plane (21) and inter-plane (22) communication links are transmitted and received in a waveband that is divided into two sub-bands (91, 92), the optical terminals (51) of the first group (G1) transmitting optical beams in the first sub-band (91) and receiving optical beams in the second sub-band (92), the optical terminals (51) of the second group (G2) transmitting optical beams in the second sub-band (92) and receiving optical beams in the first sub-band (92).

6. Device according to one of Claims 1 to 4, in which the intra-plane (21) and inter-plane (22) communication links are transmitted and received with two different polarizations, the optical terminals (51) of the first group (G1) transmitting optical beams with a first type of polarization and receiving optical beams with the second type of polarization, the optical terminals (51) of the second group (G2) transmitting optical beams with the second type of polarization and receiving optical beams with the first type of polarization.

7. Device according to one of the preceding claims, in which optical beams are transmitted and received in the optical C-band.

8. Device according to one of Claims 1 to 6, in which optical beams are transmitted and received in the optical L-band.

9. Device according to one of the preceding claims, in which the satellite follows a non-stationary orbit.

10. Satellite (10) configured to orbit within a constellation of satellites (10) distributed in multiple orbital planes, **characterized in that** it comprises a satellite platform (50) on which an inter-satellite communication device according to one of the preceding claims is positioned.

11. Constellation of satellites, **characterized in that** it comprises a plurality of satellites (10) according to the preceding claim.

12. Constellation according to the preceding claim, in which said satellites (10) follow a non-stationary orbit.

13. Constellation according to one of Claims 11 or 12, in which said satellites (10) follow a low Earth orbit.

14. Constellation according to one of Claims 11 or 12, in which said satellites (10) follow a medium Earth orbit.

FIG.1

Sens de déplacement

FIG.2

# FIG.3
Art antérieur

Pôle Nord

Sens de
déplacement du
satellite

Equateur

21

22

22

10

21

Pôle Sud

FIG.4

Sens de
déplacement du
satellite

$G_1$

51

d

$V_a$

50

$G_2$

51

d

52

$\theta_m$   $\theta_m$

53

51

$V_a$

50

51

52

## FIG.5a

$\theta_m$

51

$\phi$

51

D

50

d

$$\theta_m = \text{arcos} \; ((D + \Phi) \, / \, 2d)$$

## FIG.5b

FIG.5c

FIG.6a

FIG.6b

Angle entre liaison inter-plans et liaison intra-plan

FIG.6c

Pôle Nord

Equateur

Sens de
déplacement du
satellite

10

21

22

22

10

21

Pôle Sud

FIG.7

81 82 51

Rt

Rr

S/C

83

# FIG.8

91 93 92

Sous
bande 1

B
d
G

Sous
bande 2

1535 nm 1565 nm

# FIG.9a

2 3 4 5 6 7

16 17 18 19 20 21

22 21

32 33 34 35 36 37

21 22

46 47 48 49 50 51

62 63 64 65 66 67

Sens de déplacement du satellite

# FIG.9b

FIG.10

**EP 3 242 417 B1**

## RÉFÉRENCES CITÉES DANS LA DESCRIPTION

**Documents brevets cités dans la description**

- US 6246501 B1